# EUROPEAN PATENT SPECIFICATION

(11) **EP 1 975 923 B1**
(45) Date of publication and mention of the grant of the patent: **27.04.2016**
(21) Application number: 07105096.7
(22) Date of filing: 28.03.2007
(51) Int. Cl.: G10L 15/08

(54) **Multilingual non-native speech recognition**
Mehrsprachige nicht-muttersprachliche Spracherkennung
Reconnaissance vocale non-native plurilingues

(43) Date of publication of application: 01.10.2008
(73) Proprietor: Nuance Communications, Inc., Burlington, MA 01803 (US)
(72) Inventor: Wirsching, Günther, 85072 Eichstätt (DE); Hennecke, Marcus, 8045 Graz (AT); Schwarz, Markus, 89075 Ulm (DE); Willett, Daniel, 52146 Würselen (DE)
(74) Representative: Bertsch, Florian Oliver

(56) References cited:
- EP-A- 1 693 828
- DE-A1- 10 207 895
- VIET-BAC LE ET AL: "First Steps in Fast Acoustic Modeling for a New Target Language: Application to Vietnamese" ACOUSTICS, SPEECH, AND SIGNAL PROCESSING, 2005. PROCEEDINGS. (ICASSP '05). IEEE INTERNATIONAL CONFERENCE ON PHILADELPHIA, PENNSYLVANIA, USA MARCH 18-23, 2005, PISCATAWAY, NJ, USA,IEEE, 18 March 2005 (2005-03-18), pages 821-824, XP010792164 ISBN: 0-7803-8874-7

## Description

This invention relates to a method for selecting via a speech input a list element from a list of elements and to a system therefore.

### Related Art

Many electronic applications have design processes or sequences that are speech-guided or speech-controlled by a user. The electronic applications include destination guidance systems for vehicles, telephone and/or address systems and the like. Vehicles include automobiles, trucks, boats, airplanes and the like.

In these processes or sequences a user provides a speech input to a speech recognition unit. The speech input can correspond to a list element that the user desires to select from a list or group of list elements. The speech recognition unit processes the speech input and selects the desired list element in response to the processed speech input.

WO 2004/077405 discloses a speech recognition system using a two-step recognition procedure that is carried out on the speech input of the user. One recognition procedure separates the speech input of a whole word into at least one sequence of speech subunits to produce a vocabulary of list elements. A following recognition procedure compares the speech input of the whole word with the vocabulary of list elements.

Current approaches require that the language of the list elements and of the recognition system be the same. By way of example in a navigation application a user with a German navigation system could have difficulties in a speech-driven selection of a destination location when driving in France.

EP 1 693 828 A1 describes a multilingual speech recognition method, in which at least two subword unit speech recognition means are provided, each subword unit speech recognition means being configured to recognize subword units of a different language.

The publication "First steps in fast acoustic modeling for a new target language: application to Vietnamese", Viet Bac Le et al., Acoustics, Speech and Signal Processing, 2005, Proceedings IEEE International Conference on Philadelphia, Pennsylvania, 18. March 2005, p. 821-824, discloses a method for fast acoustic modeling of a new target language, which is used to recognize a word in the target language that is spoken in the target language by making use of acoustic units of a different source language.

### Summary of the Invention

Accordingly, a need exists to provide a possibility for a speech-driven selection of a list element coming from another natural language than the language in which the speech recognition system is trained.

This invention overcomes this need by providing a method and a speech recognition system as mentioned in the independent claims. In the dependent claims preferred embodiments of the invention are described.

According to a first aspect of the invention as claimed in claim 1 a method is provided for selecting via a speech input a list element from a list of elements. The selection by speech input is in a language different to the language of the list elements. The method comprises the step of recognizing a string of subword units for the speech input. In an additional step the recognized string of subword units is compared to the list of elements and a candidate list of best matching elements is generated based on the comparison result. For generating the candidate list of the best matching elements a confusion matrix is used which contains matrix elements comprising information about the confusion probability of subword units of different languages. In conventional systems a confusion matrix used in speech recognition systems compares subword units of the same language. One aspect of the invention now is to build and use a confusion matrix which can compare different languages. The confusion matrix defines for a given set of subword units the set of subword units that may be mistakenly recognized by a recognition system for each subword unit. The subword unit may correspond to a phoneme or a syllable of a language or any other unit such as larger groups of phonemes or smaller groups such as demiphonemes. When the subword unit is a phoneme, a sequence of phonemes is determined as string of subword units that best matches the speech input.

According to the invention, each matrix element of the confusion matrix represents the probability of confusion for a specific subword unit pair, the subword unit pair containing a subword unit of a first language and a subword unit of a second language different from the first language. The language pair and the corresponding confusion matrix is determined by determining the language of the user and by determining the language of the list of elements. Each element of the matrix represents the probability of confusion for a specific subword unit pair. Each matrix element specifies numerically how confusable the first subword unit of the subword unit pair is with the other subword unit of the subword unit pair. Preferably the confusion matrix contains the possible subword units of a first language and the probability that these possible subword units of the first language are confused with the possible subword units of the second language. Since the subword units of two languages typically differ in the number of subword units or phonemes, the confusion matrix is no longer square. A confusion matrix comparing the subword units of only one language is square, as such a matrix has the same number of columns and rows.

According to another aspect of the invention the string of subword units is recognized using a subword unit speech recognition unit trained to recognize subword units of a first language in order to recognize the speech input of a language other than the first language. The idea of this aspect is to train the confusion matrix used for the recognition using the same recognizer, but on the foreign language. By way of example a subword unit speech recognition unit trained to understand a German-language speech input is used to recognize subword unit sequences in another language such as French or English in order to estimate the confusion probabilities of the confusion matrix. The advantage of this approach is that it implicitly learns the most typical subword unit confusions between the two different languages.

According to one aspect of the invention different confusion matrices can be provided with confusion probabilities for different language pairs. In this implementation several confusion matrices would be available for the different language pairs. This allows matching against different languages. When different language pairs and different confusion matrices are available, the confusion matrix has to be selected to be used for generating the candidate list of best matching elements.

To this end it is preferable to determine the language pair of the speech input and to select the confusion matrix correspondingly by determining the language of the user and by determining the language of the list of elements. In most of the speech recognition applications the language of the user of the speech recognition system is known. If it is possible to determine the language of the list of elements, the language pair is known.

When the list of elements is a list of destination locations used in a navigation system for guiding the user to one of the destination locations of the list, it is possible to determine one of the languages of the language pair in the following way. First of all it has to be determined in which country the navigation system is used, e.g. by determining the present position of the vehicle and by comparing it to map data. When the position of the vehicle is known, the country in which the vehicle is moving can be deduced. When the country is known, the official languages of that country can be determined. By way of example when the vehicle is moving in Germany, it can be deduced that the list of destination locations comprises German names, when the vehicle is moving in France, the list may comprise French list elements such as the names of cities or other destination locations.

In another aspect of the invention the language of the user of the navigation system is determined, this language being used as the other language of the language pair. The owner of a navigation system normally has the possibility to select a predetermined language as user language for the navigation system, this language being used as default value during operation as long as no other language is selected. When the language of the user and when the language of the list of elements are known, the language pair is known so that it is possible to select the appropriate confusion matrix.

The confusion matrix can be determined as the language of the user is known and as the language of the list elements is also known.

When the speech recognition method is used in connection with a navigation system, it is also possible that the vehicle is moving in a country having more than one official language, e.g. Switzerland having the official languages German, Italian and French, or Belgium with its two official languages. In this case different lists of elements in the different languages may be provided and the candidate list of the best matching items has to be determined. The language of the user of the speech recognition system is known. In this case, however, it has to be determined whether the confusion matrix of the user language versus German, the user language versus French or the user language versus Italian is used. In addition to the three confusion matrices three different lists of elements are provided, a list of destination locations in German, a list of destination locations in French and a list of destination locations in Italian. The problem now arises as to which list and which confusion matrix to use for the matching step. One approach is to combine the different lists and to compile the best matching entries from all three lists also using the three different confusion matrices. The disadvantage of this approach is that more than one list of elements must be searched greatly increasing the search time. Furthermore, it is likely that the same entries are selected in each of the languages, reducing the number of distinct entries in the list of best matching elements.

According to another approach, when different confusion matrices are present with different language pairs and a plurality of lists is provided and when one of the confusion matrices has to be selected for determining the candidate list of best matching elements, the confusion matrix may be selected having the least number of average confusions. This means that the language best matching the user's language is selected. Once the confusion matrix has been selected, the list of elements of the different lists can be selected in accordance with the selected confusion matrix.

It is possible to determine the least number of average confusions by calculating a score of each matrix, the score indicating a fit to the user's language. The score could by way of example be used to sort the available languages by priority. Should the user indicate some language preferences, i.e. the user is able to speak one of the languages of the country in which he is traveling, these preferences can also be considered in order to select the appropriate confusion matrix and the appropriate corresponding list of elements.

The possible language pairs are known in advance. Thus, it is not necessary to compute the score during use. It is possible to compute the scores beforehand and to store the respective scores with the different matrices. In the case of square matrices the entries on the main diagonal correspond to the self-confusion probabilities, whereas the off-diagonal elements correspond to the incorrect recognitions, i.e. the recognition errors. Counting all errors in the matrix would be one way to determine the fit between the list and the recognition system. Unfortunately, this approach can cause difficulties in the present case, as the matrix compares two different languages with different phoneme sets.

According to one embodiment of the invention it is possible to determine the score by determining the entropy of each matrix, the lower the entropy the better the fit to the user's language. In the statistical approach used herein the entropy is a measure of the number of microscopic configurations. In the present approach the entropy could be determined for each row of the matrix. If the entropy is large, this means that the probabilities of confusion for all the different matrix elements of this row are about the same. In the present context this means that the probability that a first phoneme or subword unit is understood as a phoneme or subword unit of the other language are about the same for all phonemes of the other language. In the present context the lower the entropy of each column and of the complete matrix by adding the different columns, the better the fit to the user's language and the lower the confusion probability.

Additionally, it is possible to calculate the score by determining a mutual information, the higher the mutual information the better the fit to the user's language. In order to estimate the confusion probabilities for the confusion matrix recognition runs have to be done. Thus, for each utterance in the training set both the correct and the recognized phoneme sequences are available. This makes it possible to compute the mutual information between the phoneme sequences. The higher the mutual information the better the predictive power of the recognized string of phonemes and the better the matrix.

Yet another approach is to perform actual recognition experiments on real data. In this embodiment the score is determined by carrying out recognition experiments using the different matrices and using test data, the matrix having the highest recognition rates being used for generating the candidate list. While this approach is by far the most expensive one, it also delivers the most accurate scores.

According to a further aspect of the invention the latter relates to a speech recognition system for selecting a list element from a list of elements using a speech input as defined in claim 16.

The system comprises a subword unit speech recognition unit recognizing a string of subword units for the speech input. A subword unit comparison unit compares the recognized string of subword units to the list of elements and generates a candidate list of best matching elements based on the comparison result. Furthermore, a confusion matrix is provided in a memory, the confusion matrix containing matrix elements comprising information about the confusion probability that a subword unit of a first language is confused with a subword unit of a second language. The subword unit comparison unit generates the list of best matching elements based on said at least one multi-lingual confusion matrix. The above-described speech recognition system allows the selection by voice of an entry from a list in a language other than the language of the list elements. The speech recognition system has the advantage that it is both memory and CPU efficient so as to work on an embedded device.

According to the invention, the matrix is designed in such a way that each matrix element of the confusion matrix represents the probability of confusion for a specific subword unit pair, the subword unit pair containing a subword unit of a first language and a subword unit of a second language. The language pair and the corresponding confusion matrix is determined by determining the language of the user and by determining the language of the list of elements. The speech recognition system may be a two-step speech recognition system as described in WO 2004/077405. In such an embodiment the first step of the speech recognition generates the candidate list of best matching items, i.e. a smaller list out of a larger list of elements. The second speech recognition step recognizes and selects an item from the candidate list which best matches the speech input. Once the short candidate list has been generated, it must be enrolled in the recognition system for the second recognition step. This is done as before, but now the recognition system handles entries of different languages. For example, a German recognition system might receive English phonemes. In the art methods are available and known to the skilled person to perform a mapping from a foreign set of phonemes to the phoneme set of the recognizer's language. Alternatively, a recognizer can be used with acoustic models from different languages to handle the foreign phonemes. Both approaches are feasible, as the short list only contains a fraction of the entries of the full list.

Referring back to the speech recognition system and the first recognition step using the multi-lingual confusion matrix, the subword unit speech recognition unit can be trained to recognize subword units of a first language and may generate the string of subword units for a speech input of a language other than the first language. As mentioned above, the advantage of the approach is that the system implicitly learns the most typical confusions between the two different languages. A storage unit may be provided containing the different confusion matrices providing confusion probabilities for different subword unit pairs of different languages.

In order to determine which matrix and which list of elements should be used the speech recognition system may comprise a language pair determination unit determining the two languages of the subword unit pair or pairs.

In the case of a navigation application a data base is provided containing different lists of elements or different destination locations for the different countries to which the user can be guided. For determining the language pair a user language determination unit may be provided determining the user language of the speech recognition system, this user language being used for determining one of the languages of the subword unit pair. Furthermore, a country determination unit may be provided determining the official language or official languages of the country in which the vehicle is moving, the language or languages being used for determining the other language of the language pair.

When the language pair is known, a confusion matrix selecting unit is provided selecting a confusion matrix out of a plurality of confusion matrices, the confusion matrix selecting unit selecting the confusion matrix in dependence on the information received from the language pair determination unit. When the confusion matrix selecting unit cannot select the confusion matrix taking into account the user language and the official language of the country in which the vehicle is moving (e.g. when the country has more than one official language), a confusion determination unit can be used determining the average number of confusions of each confusion matrix. The confusion matrix selecting unit then selects the matrix having the least number of confusions. To this end a score determination unit can be provided determining a score for each of the confusion matrices, the score indicating a fit to the user's language. It should be understood that the score determination unit needs not to be provided within the speech recognition system the whole time. It needs to be provided once for determining the different scores. After the scores have been computed and a score was determined for each confusion matrix, and the scores were stored to the corresponding matrices the score determination unit needs not to be present any more. Depending on the scores of the different matrices the confusion matrix selecting unit selects a confusion matrix out of said plurality of confusion matrices. Preferably the speech recognition system works according to a method as mentioned above.

### Brief Description of the Drawings

The invention may be better understood with reference to the following drawings and description. The components in the figures are not necessarily to scale, emphasis instead being placed upon illustrating the principles of the invention.

### In the drawings

Fig. 1 represents a schematic view of a speech recognition system of the invention,
Fig. 2 shows a confusion matrix containing confusion probabilities for two different languages used in the system of Fig. 1,
Fig. 3 is a more detailed view of the speech recognition system shown in Fig. 1,
Fig. 4 shows a flowchart of a method for recognizing speech to select a list element from a list of elements using the matrix of Fig. 2, and
Fig. 5 shows another flowchart indicating in more detail the method steps of a multi-lingual non-native recognition on a list of elements.

### Detailed Description of Preferred Embodiments

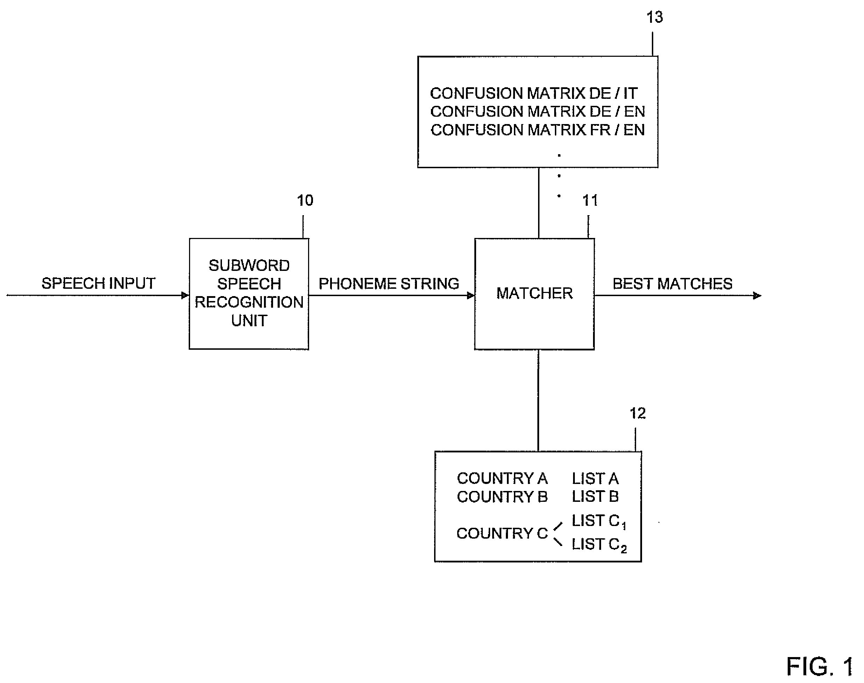

In Fig. 1 a speech recognition system is shown allowing a multi-lingual recognition of a speech input. The system shown in Fig. 1 especially allows the selection by voice of an entry from a list in a language other than the user's language. In the embodiment shown the system is shown in connection with a navigation system guiding the user to a predetermined destination location. However, this invention is not restricted to the selection of a destination location via a speech input. The invention can be used in any situation where a speech input in a language other than the user's language should be correctly identified. In many speech recognition systems the most probable decoding of the acoustic signal as the recognition output is output to the user, or the best matching results are output to the user so that the user can select one of the best matching results. The system keeps multiple hypotheses that are considered during the recognition process, these multiple hypotheses, called best matching elements in the present context, provide grounds for additional information that have been explored by retrieval systems. One issue in speech recognition systems is the concept of known and unknown vocabulary terms, a vocabulary being a set of words that the speech recognition system uses to translate speech into text. As part of the decoding process the speech recognition system matches the acoustics from the speech input to words in the vocabulary. Therefore, only words in the vocabulary are capable of being recognized. A word not in the vocabulary will often be erroneously recognized as a known vocabulary word that is phonetically similar to another word not known to the speech recognition system. The vocabulary could be any vocabulary, e.g. names, addresses, or any other vocabulary such as a complete set of words on one language. Accordingly, the vocabulary is not limited to list elements describing destination locations, the vocabulary could contain any kind of list elements.

Fig. 1 schematically shows a speech recognition system in which the speed input is input to a subword speech recognition unit 10. The subword speech recognition unit 10 processes the speech input and generates a string of subword units, in the embodiment shown a phoneme string. The phoneme string is fed to a matcher 11 in which the phoneme string is compared to a list of elements stored in a data base 12. In the embodiment shown the data base 12 comprises in different lists destination locations. By way of example for a country A in list A all the possible destination locations that can be reached within this country are contained. Such a list can have a large number of entries, e.g. more than 50,000 or 150,000 list elements. In the embodiment shown the list contains navigation data. However, the list may also include personal names or telephone numbers or any other data. In the date base 12 the lists are provided in the official languages of the respective country. In the embodiment shown the countries A and B have one official language so that one list is provided for each country. Country C has two official languages so that the list of the different destinations exists for the first and for the second official language. When the user wants to select one of the elements of the list, the speech input will contain this list element. The matcher compares the phoneme string received from the subword speech recognition unit and generates a candidate list of best matching items, thus a candidate list of best matching items can be presented directly to the user if it contains a small number of elements. However, the candidate list could also contain a much higher number of list elements, e.g. 500 or 2,000. In such a case the candidate list of best matching elements forms the basis of a second recognition step in which the speech input is compared to this smaller list.

The user of the navigation system may now travel in a country in which another language is spoken than the language of the user. By way of example an English driver using an English navigation system may travel in Germany or France or a German user may travel in France or Great Britain. In these examples the destination locations stored in the lists are list elements having another language than the user language.

In order to allow higher recognition rates when a user utters a city name of another language, a memory 13 is provided comprising different confusion matrices. In the embodiment shown the memory 13 comprises a first confusion matrix comprising German subword units and Italian subword units. Furthermore, a confusion matrix comparing German and English subword units is provided and a confusion matrix comprising French and English phoneme sets or subword units.

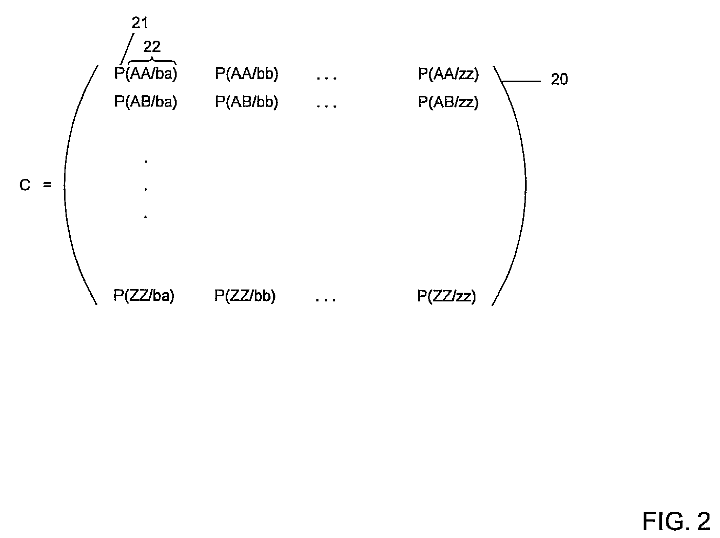

Reference is also made to Fig. 2 showing in more detail a confusion matrix 20. The confusion matrix comprises a plurality of matrix elements 21, the confusion matrix indicating the probability that one subword unit is recognized given that the acoustics belong to another subword unit. Each matrix element 21 Cᵢⱼ presents the probability of confusion for a specific subword unit pair, i.e. Cᵢⱼ=P(j/i), where Cᵢⱼ specifies numerically how confusable subword unit i is with subword unit j. P(j/i) is the probability that subword unit j is recognized given that the acoustics belong to subword unit i. In the embodiment shown the upper left matrix element 21 represents the probability of confusion for the subword unit pair 22. In the embodiment shown in Fig. 2 the large characters represent the subword units or phonemes of one language, the small characters represent the subword units or phonemes of another language. The first language has the possible subword units AA-ZZ, the second language has the subword units ba-zz. Since the phoneme sets of two different languages normally differ in the number of phonemes, the confusion matrix is no longer square.

The system shown in Fig. 1 now comprises several of these confusion matrices, each confusion matrix indicating the confusion probabilities of the subword units of one language with the subword units of another language.

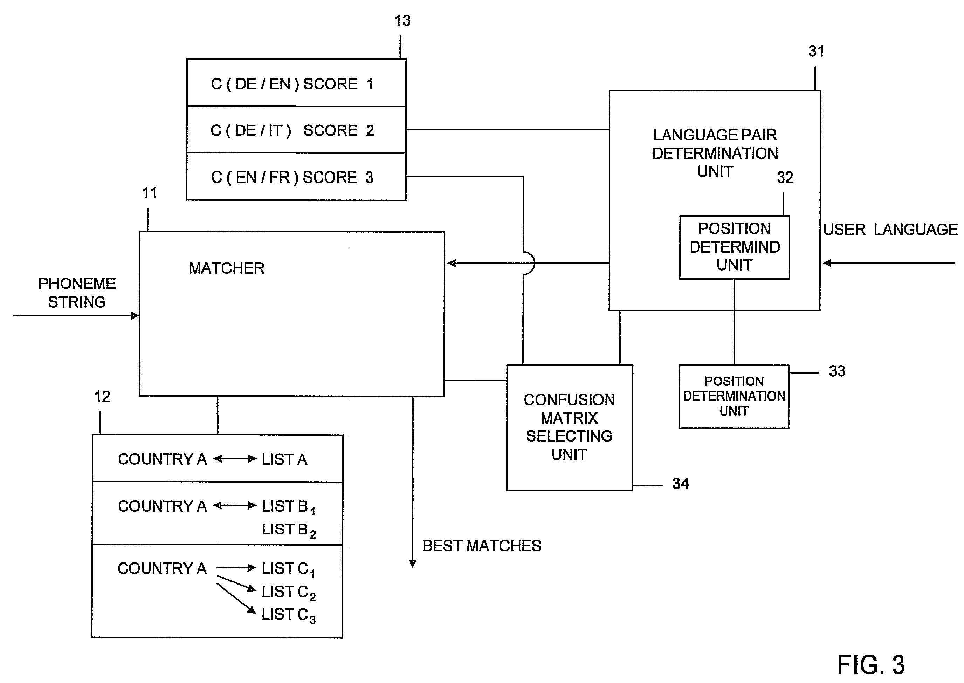

In connection with Fig. 3 it is explained in more detail how it can be determined which of the confusion matrices and which of the lists is to be used. In order to determine which confusion matrix should be used for determining the best matching results the language pair has to be determined. One language of the language pair can be determined, as the language of the user is known to the system, e.g. the system knows that the user speaks German, as this language is set as a default value. The other language of the language pair can now be determined in the following way. To this end a language pair determination unit 31 is provided, the language pair determination unit receiving the user language as one input. The language pair determination unit further comprises a country determination unit 32 determining in which country the speech recognition system is used. In navigation applications the system normally comprises a position determination unit 33 determining the present position of the system (of the vehicle when used in a vehicle). When the vehicle or system position is known, the country can be easily determined by comparing the vehicle position to map data. The language pair determination unit now knows the two languages of the language pair and can then access the memory 13 in order to retrieve the corresponding confusion matrix. By way of example an English user is traveling in France. As a consequence, the language pair determination unit will retrieve the confusion matrix containing the confusion probabilities for English and French subword units. This confusion matrix is transmitted to the matcher, where it is used in connection with one of the lists of the data base 12. Due to the fact that the country in which the vehicle is moving is known, the list is also known. In the example mentioned above this means that the English user selects a destination location in France having a French name using the French list of the destination locations. To this end the confusion matrix containing the English-French language pair is used.

Normally, these confusion matrices are determined in advance and are stored within the system. In order to determine the confusion probabilities the system has to be trained. According to another aspect of the invention the confusion probabilities of the confusion matrix can be determined by using the same matcher, but on the foreign language. By way of example the English matcher is used to recognize phoneme sequences on French data to estimate the confusion probabilities of the confusion matrix. The advantage of this approach is that it may implicitly learn the most typical phonetic confusions between French and English. By providing different confusion matrices with different language pairs the system allows matching against different languages.

However, the situation can also be more complicated. By way of example it is also possible that the user is using the speech recognition system in a foreign country having more than one language. In the embodiment shown the date base comprises a country C having three different lists C1, C2 and C3. For example, when the system is used in Switzerland, the Swiss list of elements (i.e. destinations) may be available in German, French and Italian. An English tourist in Switzerland, however, may not speak either one of these languages. However, there may be confusion matrices for any of the language pairs English-Italian, English-French and English-German. The problem now arises as to which list to use for the match.

One approach could be to simply use all lists and to compile the best matching entries from all the lists. However, the disadvantage of this approach is more than one list must be searched, thus greatly increasing the search time. Taking into account that each list may have more than 50,000 entries, such an approach would not be very efficient. Another disadvantage of this approach is that the same entries may be selected in each of the languages, thus reducing the number of distinct entries in the best matching results. It is now possible that the user has indicated certain language preferences (e.g. the English tourist is able to speak one of the official languages in Switzerland). This preference can then be used to select the appropriate confusion matrix and the corresponding list. By way of example when the English tourist speaks German, the English-German confusion matrix and the German list of entries could be used for determining the best matching results.

However, it is also possible that no preferences are present. In this situation the procedure can be as follows. The system can be configured in such a way to select the language pair having the least number of average confusions. For the example mentioned above this means that the language pair is selected between English-German, English-French, and English-Italian. The language pair and the corresponding confusion matrix and the related list have to be determined. The language best matching the user's language can be selected by determining in advance a score representing the fit to the user's language. In the embodiment shown in Fig. 3 the score is stored together with the confusion matrix. For determining the score a score determination unit may be provided. If the score is stored together with the matrix, the score needs not to be calculated during use. However, during the design of the speech recognition system the score has somehow to be determined. Several approaches are possible to compute the score. In the case of square matrices the entries of the main diagonal correspond to the self-confusion probabilities, whereas the off-diagonal elements correspond to the incorrect recognitions, i.e. there are recognition errors. Counting all errors in the matrix would be one way to determine the fit between the two languages or between the list and the recognizer. Unfortunately, it may be difficult to implement this approach, as in the present case the matrix compares two different languages with different subword unit sets. The matrix is normally not square anymore, so that it may be difficult to determine the non-diagonal matrix elements. Another possibility to determine the score is to use an entropy measure of the matrix. The entropy of the matrix is a measure of the uncertainty remaining after application of the matrix. The less uncertainty remains the better the fit. Another possibly approach is to compute the mutual information. In order to estimate the confusion probabilities of the confusion matrix recognition runs have to be done. For each utterance in a training set both the correct and the recognized phoneme sequences are available. This makes it possible to compute the mutual information between the phoneme sequences. The higher the mutual information the better the predictive power of the recognized phoneme sequence and the better the matrix. Yet another approach is to perform actual recognition experiments on real data. While this approach is by far the most expensive, it also delivers the most accurate scores. The matrix with the highest recognition rates wins in this case.

In order to select the correct matrix a confusion matrix selecting unit 34 may be provided determining in case that several confusion matrices and several lists are possible, the needed matrix and the corresponding list. The confusion matrix selecting unit selects the confusion matrix having the least number of average confusion. The user language is known and the other language of the language pair is now determined by selecting the language which best fits the user language from the official languages of the country in which the system is used. Now the second language of the language pair is known and the corresponding list is used for determining the best matching elements from the list. The best matching elements may be comprised in a smaller list of list elements, e.g. in a list of 100 and 2,000 elements. A second speech recognition step (not shown in the present figures) applies a speech recognition on the smaller list of entries. In the second step the most likely entry in the list for the same speech input is determined by matching phonetic acoustic representations of the entries listed in the candidate list to the acoustic input and determining the best matching entry. This approach saves computational resources, since the phoneme recognition performed in the first step is less demanding and the computational expensive second step is performed only on a small subset of the large list of elements. Such a two-step recognition system is known from DE 102 07 895 A1, to which reference is made for further details of the two-step recognition approach.

In the second recognition step again two different languages are compared. For example, a German recognizer might receive English phonemes. Methods are available in the literature to perform a mapping from a foreign phoneme set to the phoneme set of the recognizer's language. Alternatively, a recognizer can be used with acoustic models from different languages to handle the foreign phonemes. Both approaches are feasible, as the short list only contains a fraction of the entries of the large list of list elements.

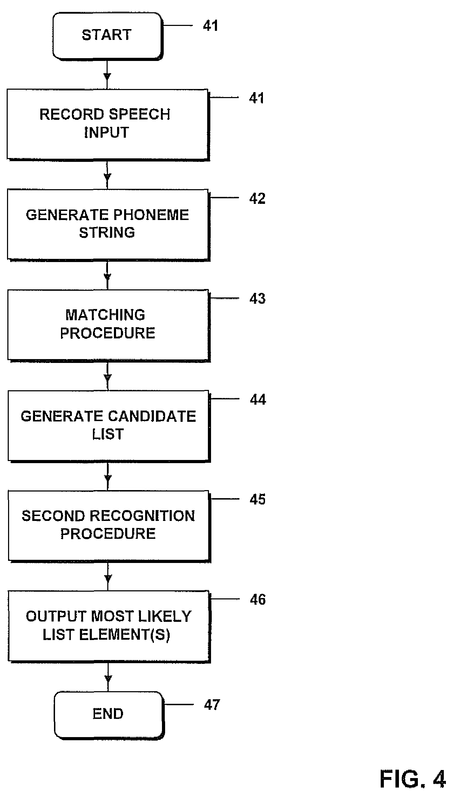

In Fig. 4 such a two-step recognition approach is shown. After starting the process in step 41, the speaker speaks the full description of the desired list element. The list element includes for example the name of the city or street or the name of a person when selecting from a telephone list. This speech input is recorded in step 41 for additional use in the second recognition step. In a first recognition step a phoneme string is generated in step 42. Normally, the first phoneme string is generated independently of the vocabulary of the list elements stored in the data base 12. A sequence of speech subword units is constructed that includes a sequence of consecutive phoneme parts, a sequence of phonemes, a sequence of letters, a sequence of syllables, or the like. In step 43 the mapping procedure is carried as explained above using the multi-lingual confusion matrices. The generated string of subword units is compared to the list of elements and a candidate list of best matching element is generated in step 44. In step 45 a second recognition step is carried out, this second recognition step being based on the candidate list of the best matching results and not on the whole list used in the first matching step 43. In step 45 the recorded speech input is delivered to a recognition unit (not shown) configured with the candidate list of the best matching items. In step 46 the most likely list element or list elements are then presented to the user or the most likely list element is used and can be further processed. The method ends in step 47.

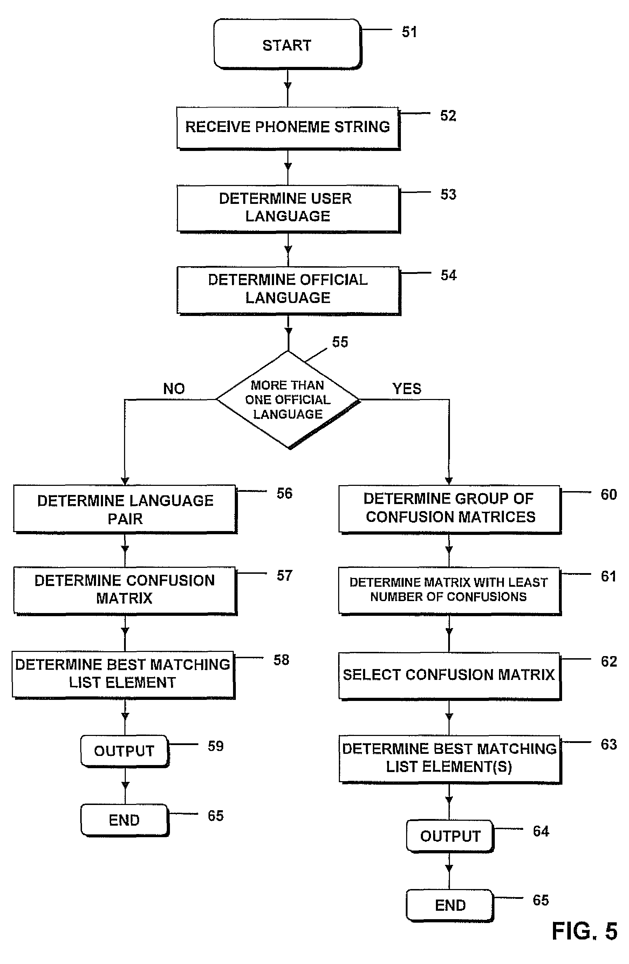

In Fig. 5 the selection of the confusion matrix and the corresponding list of elements explained in Fig. 3 is summarized in a flowchart. After starting the process in step 51 and after the phoneme string has been received from the subword speech recognition unit in step 52, the user language has to be determined in order to determine one language of the language pair (step 53). The determination of the language pair is necessary for the selection of the confusion matrix and the list of elements. In the next step the official language in which the recognition system is used is determined in step 54. In step 55 it is asked whether there exits more than one official language for the country in which the system is used. If this is not the case, the official language is known and it is possible to determine the language pair in step 56. Once the language pair is known, the corresponding confusion matrix can be determined in step 57 and the candidate list of best matching elements can be determined in step 58. This candidate list can be output to the second recognition step as discussed in connection with Fig. 4 (step 59). In case of a one-step recognition procedure, the best matching element(s) are presented to the user for confirmation or for further selection. In case more the one official language exists in a country, the possible confusion matrices that might be used for the recognition process have to be determined in step 60. In the above-mentioned example an English tourist traveling in Switzerland the determined group contains the matrix elements English-German, English-French, and English-Italian. In order to determine which of the confusion matrices should be used for the matching process it is determined in step 61 which matrix has the least number of confusions indicating which language is the language best matching the user's language. This can be done by comparing the scores of the matrices. In step 62 the matrix is selected in dependence on the score. When the best matching language is known by calculating the score, the list of list elements of said language is selected and the candidate list of best matching entries is determined using the selected matrix and the corresponding list of elements (step 63). The results can be output for further processing in step 64 before the process ends in step 65.

Summarizing, this invention allows a memory and CPU efficient selection by a voice of an entry from a list in a language other than the user's language by using a confusion matrix comparing different languages.

## Claims

1. Method for selecting via a speech input a list element from a list of elements, the selection by speech input being in a language different to the language of the list elements, the method comprising the following steps:
- recognizing a string of subword units for the speech input,
- comparing the recognized string of subword units to the list of elements and generating a candidate list of best matching elements based on the comparison result, wherein
for generating the candidate list of best matching elements a confusion matrix (20) is used which contains matrix elements (21) comprising information about the confusion probability of subword units of different languages, wherein each matrix element (21) of the confusion matrix represents the probability of confusion for a specific subword unit pair (22), the subword unit pair containing a subword unit of a first language and a subword unit of a second language, wherein the language pair and the corresponding confusion matrix is determined by determining the language of the user and by determining the language of the list of elements.

2. Method according to claim 1, wherein the confusion matrix (20) contains the possible subword units of a first language and the probability that the possible subword units of the first language are confused with subword units of another language.

3. Method according to any of the preceding claims, wherein the string of subword units is recognized using a subword unit speech recognition unit (10) trained to recognize subword units of a first language in order to recognize the speech input of a language other than the first language.

4. Method according to any of the preceding claims, wherein different confusion matrices (20) are provided providing confusion probabilities for different language pairs.

5. Method according to any of the preceding claims, wherein the list of elements comprises different destination locations used in a navigation system for guiding the user to one of the destination locations of the list.

6. Method according to claim 4 and 5, wherein, for determining which confusion matrix is to be used, it is determined in which country the navigation system is used, said information being used for determining the language of the list of elements comprising the different destination locations and/or for determining one language of the language pair.

7. Method according to any of the preceding claims, wherein for determining which confusion matrix is to be used, the language of the user of the navigation system is determined, the language of the user being used for determining the other language of the language pair.

8. Method according to claim 6 and 7, wherein the confusion matrix is selected depending on the language of the country in which the navigation system is used and depending on the language of the user.

9. Method according to any of the preceding claims, wherein, when different list of elements are provided in different languages and the candidate list of best matching items is to be determined, the different lists are combined and the candidate list of best matching items is generated based on the elements from the different lists.

10. Method according to any of the preceding claims, wherein when different confusion matrices are present with different language pairs and a plurality of list elements are provided, and when one of the confusion matrices has to be selected for determining the candidate list, the confusion matrix is selected having the least number of average confusions.

11. Method according to claim 10, wherein, when one of the confusion matrices has been selected, the list of elements of said different lists is selected in accordance with the selected confusion matrix.

12. Method according to claim 10 or 11, wherein, for determining the least number of average confusions a score is calculated for each matrix, the score indicating a fit to the user's language.

13. Method according to claim 12, wherein the score is determined by determining the entropy of each matrix, the lower the entropy the better the fit to the user's language.

14. Method according to claim 12 or 13, wherein the score is determined by determining a mutual information, the higher the mutual information the better the fit to the user's language.

15. Method according to any of claims 12 to 14, wherein the score is determined by carrying out recognition experiments using the different matrices and using test data, the matrix having the highest recognition rates being used for generating the candidate list.

16. Speech recognition system for selecting, via a speech input, a list element from a list of elements, the selection by speech input being in a language different to the language of the list elements, the system comprising:
- a subword unit speech recognition unit (10) for recognizing a string of subword units for the speech input,
- a subword unit comparison unit (11) for comparing the recognized string of subword units to the list of elements and generating a candidate list of best matching elements based on the comparison result,
a memory (13) for storing at least one confusion matrix (20), each matrix containing matrix elements (21) comprising information about the confusion probability that a subword unit of a first language is confused with a subword unit of another language,
wherein the subword unit comparison unit (11) is adapted to generate the list of best matching elements based on said at least one confusion matrix,
wherein each matrix element (21) of the confusion matrix represents the probability of confusion for a specific subword unit pair (22), the subword unit pair containing a subword unit of a first language and a subword unit of a second language, wherein the language pair and the corresponding confusion matrix is determined by determining the language of the user and by determining the language of the list of elements.

17. Speech recognition system according to claim 16, wherein the confusion matrix (20) contains matrix elements (21) representing the confusion probabilities of possible subword units of a first language to subword units of a second language.

18. Speech recognition system according to any of claims 16 to 17, wherein the subword unit speech recognition unit (10) is trained to recognize subword units of a first language and generates the string of subword units for a speech input of a language other than the first language.

19. Speech recognition system according to any of claims 16 to 18, wherein the storage unit (13) contains different confusion matrices providing confusion probabilities for different subword unit pairs of different languages.

20. Speech recognition system according to claim 19, wherein the system further comprises a language pair determination unit (31) for determining the two languages of the subword unit pairs.

21. Speech recognition system according to any of claims 16 to 20, wherein a data base (12) is provided containing the list of elements, the list of elements corresponding to different destination locations used in a navigation system for guiding the user to one of the destination locations of the list.

22. Speech recognition system according to claim 20 or 21, wherein the language pair determination unit (31) comprises a user language determination unit for determining the language of the user of the speech recognition system, the user language being used for determining one of the languages of the subword unit pair.

23. Speech recognition system according to any of claims 16 to 22, wherein the language pair determination unit further comprises a country determination unit (32) for determining the official languages of the country in which the vehicle is moving, the languages being used for determining the other language of the language pair.

24. Speech recognition system according to claim 23, wherein the country determination unit (32) comprises a vehicle position determination unit (33) for determining the actual vehicle position and deducing the official language or languages of the country in which the vehicle is moving.

25. Speech recognition system according to any of claims 16 to 24, wherein a confusion matrix selecting unit (34) is provided for selecting a confusion matrix out of a plurality of confusion matrices, the confusion matrix selecting unit for selecting the confusion matrix in dependence on the information received from the language pair determination unit.

26. Speech recognition system according to any of claims 16 to 25, further comprising:
- an official language determination unit for determining the official language or languages of the country in which the vehicle is moving,
- a confusion matrix selecting unit (34) for selecting a confusion matrix out of a group of confusion matrices, the group containing the confusion matrices in which one language of the language pair is the user language, and the other language of the language pair is one of the official languages of the country in which the vehicle is moving.

27. Speech recognition system according to any of claims 16 to 26, wherein a confusion determination unit is provided which is adapted to determine the average number of confusions of each confusion matrix

28. Speech recognition system according to claim 26 and 27, wherein the confusion matrix selecting unit is adapted to select the matrix having the least number of confusions if several confusion matrices are provided having language pairs in which one of the language is the user language and the other language is an official language of the country in which the speech recognition system is used.

29. Speech recognition system according to any of claims 26 to 28, wherein the confusion matrix selecting unit is adapted to select the confusion matrix in accordance with the information of the confusion determination unit providing the information which matrix has the least number of confusions.

30. Speech recognition system according to any of claims 16 to 29, wherein a score determination unit is provided, which is adapted to determine a score for each confusion matrix, the score indicating a fit to the user's language.

31. Speech recognition system according to any of claims 26 to 30, wherein the confusion matrix selecting unit is adapted to select a confusion matrix out of said plurality of confusion matrices depending on the scores of the different matrices.

32. Speech recognition system according to claim 16, wherein the speech recognition system is adapted to work according to a method as claimed in any of claims 1 to 15.

## Patentansprüche

1. Verfahren zum Auswählen eines Listenelements aus einer Liste von Elementen über eine Spracheingabe, wobei die Auswahl über die Spracheingabe in einer anderen Sprache ist als der Sprache des Listenelements erfolgt, wobei das Verfahren die folgenden Schritte umfasst:
- Erkennen einer Zeichenfolge von Unterworteinheiten für die Spracheingabe,
- Vergleichen der erkannten Zeichenfolge von Unterworteinheiten mit der Liste von Elementen und Erzeugen einer Kandidatenliste von am besten passenden Elementen basierend auf dem Vergleichsergebnis, wobei zum Erzeugen der Kandidatenliste von am besten passenden Elementen eine Verwechslungsmatrix (20) verwendet wird, welche Matrixelemente (21) enthält, welche eine Information über die Verwechslungswahrscheinlichkeit von Unterworteinheiten von unterschiedlichen Sprachen umfasst, wobei jedes Matrixelement (21) der Verwechslungsmatrix die Wahrscheinlichkeit einer Verwechslung für ein spezielles Unterworteinheitenpaar (22) darstellt, wobei das Unterworteinheitenpaar eine Unterworteinheit einer ersten Sprache und eine Unterworteinheit einer zweiten Sprache enthält, wobei das Sprachenpaar und die entsprechende Verwechslungsmatrix durch Bestimmen der Sprache des Benutzers und durch Bestimmen der Sprache der Liste von Elementen bestimmt wird.

2. Verfahren nach Anspruch 1, wobei die Verwechslungsmatrix (2) die möglichen Unterworteinheiten einer ersten Sprache und die Wahrscheinlichkeit, dass die möglichen Unterworteinheiten der ersten Sprache mit Unterworteinheiten einer anderen Sprache verwechselt werden, enthält.

3. Verfahren nach einem der vorhergehenden Ansprüche, wobei die Zeichenkette der Unterworteinheiten unter Verwendung einer Unterworteinheitensprachenerkennungseinheit (10) erkannt wird, welche trainiert ist, Unterworteinheiten einer ersten Sprache zu erkennen, um die Spracheingabe einer anderen Sprache als der ersten Sprache zu erkennen.

4. Verfahren nach einem der vorhergehenden Ansprüche, wobei unterschiedliche Verwechslungsmatrizen (20) bereitgestellt werden, welche Verwechslungswahrscheinlichkeiten für unterschiedliche Sprachenpaare bereitstellen.

5. Verfahren nach einem der vorhergehenden Ansprüche, wobei die Liste von Elementen unterschiedliche Zielorte umfasst, welche in einem Navigationssystem zum Führen des Benutzers zu einem der Zielorte der Liste verwendet werden.

6. Verfahren nach Anspruch 4 und 5, wobei zum Bestimmen, welche Verwechslungsmatrix zu verwenden ist, bestimmt wird, in welchem Land das Navigationssystem verwendet wird, wobei die Information zum Bestimmen der Sprache von der Liste von Elementen, welche die unterschiedlichen Zielorte umfasst, und/oder zum Bestimmen einer Sprache des Sprachenpaars verwendet wird.

7. Verfahren nach einem der vorhergehenden Ansprüche, wobei zum Bestimmen, welche Verwechslungsmatrix zu verwenden ist, die Sprache des Benutzers des Navigationssystems bestimmt wird, wobei die Sprache des Benutzers zum Bestimmen der anderen Sprache des Sprachenpaars verwendet wird.

8. Verfahren nach Anspruch 6 und 7, wobei die Verwechslungsmatrix abhängig von der Sprache des Landes, in welchem das Navigationssystem verwendet wird, und abhängig von der Sprache des Benutzers ausgewählt wird.

9. Verfahren nach einem der vorhergehenden Ansprüche, wobei, wenn unterschiedliche Listen von Elementen in unterschiedlichen Sprachen bereitgestellt werden und die Kandidatenliste von am besten passenden Elementen zu bestimmen ist, die unterschiedlichen Listen kombiniert werden und die Kandidatenliste der am besten passenden Elemente basierend auf den Elementen von den unterschiedlichen Listen erzeugt wird.

10. Verfahren nach einem der vorhergehenden Ansprüche, wobei, wenn unterschiedliche Verwechslungsmatrizen mit unterschiedlichen Sprachenpaaren vorhanden sind und mehrere Listenelemente vorgesehen sind, und wenn eine der Verwechslungsmatrizen zum Bestimmen der Kandidatenliste auszuwählen ist, die Verwechslungsmatrix ausgewählt wird, welche die niedrigste Anzahl von durchschnittlichen Verwechslungen aufweist.

11. Verfahren nach Anspruch 10, wobei, wenn eine der Verwechslungsmatrizen ausgewählt wurde, die Liste von Elementen der unterschiedlichen Listen gemäß der ausgewählten Verwechslungsmatrix ausgewählt wird.

12. Verfahren nach Anspruch 10 oder 11, wobei zum Bestimmen der niedrigsten Anzahl von durchschnittlichen Verwechslungen eine Punktzahl für jede Matrix berechnet wird, wobei die Punktzahl ein Passen zu der Benutzersprache anzeigt.

13. Verfahren nach Anspruch 12, wobei die Punktzahl durch Bestimmen der Entropie einer jeden Matrix bestimmt wird, wobei das Passen zu der Benutzersprache umso besser ist, je niedriger die Entropie ist.

14. Verfahren nach Anspruch 12 oder 13, wobei die Punktzahl durch Bestimmen einer Gemeinsamkeitsinformation bestimmt wird, wobei das Passen zu der Benutzersprache umso besser ist, je höher die Gemeinsamkeitsinformation ist.

15. Verfahren nach einem der Ansprüche 12 bis 14, wobei die Punktzahl durch Ausführen von Erkennungsexperimenten unter Verwendung der unterschiedlichen Matrizen und unter Verwendung von Testdaten bestimmt wird, wobei die Matrix, welche die höchsten Erkennungsraten aufweist, zum Erzeugen der Kandidatenliste verwendet wird.

16. Spracherkennungssystem zum Auswählen eines Listenelements aus einer Liste von Elementen über eine Spracheingabe, wobei die Auswahl über die Spracheingabe in einer anderen Sprache als der Sprache des Listenelements erfolgt, wobei das System umfasst:
- eine Unterworteinheitensprachenerkennungseinheit (10) zum Erkennen einer Zeichenfolge von Unterworteinheiten für die Spracheingabe,
eine Unterworteinheitenvergleichseinheit (11) zum Vergleichen der erkannten Zeichenfolge von Unterworteinheiten mit der Liste von Elementen und Erzeugen einer Kandidatenliste von am besten passenden Elementen basierend auf dem Vergleichsergebnis,
einen Speicher (13) zum Speichern von mindestens einer Verwechslungsmatrix (20), wobei jede Matrix Matrixelemente (21) enthält, welche eine Information über die Verwechslungswahrscheinlichkeit, dass eine Unterworteinheit einer ersten Sprache mit einer Unterworteinheit einer anderen Sprache verwechselt wird, umfasst,
wobei die Unterworteinheitenvergleichseinheit (11) ausgestaltet ist, die Liste von am besten passenden Elementen basierend auf der mindestens einen Verwechslungsmatrix zu erzeugen,
wobei jedes Matrixelement (21) der Verwechslungsmatrix die Wahrscheinlichkeit einer Verwechslung für ein spezielles Unterworteinheitenpaar (22) darstellt, wobei das Unterworteinheitenpaar eine Unterworteinheit einer ersten Sprache und eine Unterworteinheit einer zweiten Sprache enthält, wobei das Sprachenpaar und die entsprechende Verwechslungsmatrix durch Bestimmen der Sprache des Benutzers und durch Bestimmen der Sprache der Liste von Elementen bestimmt wird.

17. Spracherkennungssystem nach Anspruch 16, wobei die Verwechslungsmatrix (20) Matrixelemente (21) enthält, welche die Verwechslungswahrscheinlichkeiten von möglichen Unterworteinheiten einer ersten Sprache mit Unterworteinheiten einer zweiten Sprache darstellen.

18. Spracherkennungssystem nach einem der Ansprüche 16 bis 17, wobei die Unterworteinheitensprachenerkennungseinheit (10) ausgebildet ist, Unterworteinheiten einer ersten Sprache zu erkennen, und die Zeichenfolge von Unterworteinheiten für eine Spracheingabe einer anderen Sprache als der ersten Sprache erzeugt.

19. Spracherkennungssystem nach einem der Ansprüche 16 bis 18, wobei die Speichereinheit (13) unterschiedliche Verwechslungsmatrizen enthält, welche Verwechslungswahrscheinlichkeiten für unterschiedliche Unterworteinheitenpaare von unterschiedlichen Sprachen bereitstellen.

20. Spracherkennungssystem nach Anspruch 19, wobei das System ferner eine Sprachenpaarbestimmungseinheit (31) zum Bestimmen der zwei Sprachen der Unterworteinheitenpaare umfasst.

21. Spracherkennungssystem nach einem der Ansprüche 16 bis 20, wobei eine Datenbasis (12) vorgesehen ist, welche die Liste von Elementen enthält, wobei die Liste von Elementen verschiedenen Zielorten entspricht, welche in einem Navigationssystem zum Führen des Benutzers zu einem der Zielorte der Liste verwendet wird.

22. Spracherkennungssystem nach Anspruch 20 oder 21, wobei die Sprachenpaarbestimmungseinheit (31) eine Benutzersprachenbestimmungseinheit zum Bestimmen der Sprache des Benutzers des Spracherkennungssystems umfasst,
wobei die Benutzersprache zum Bestimmen einer der Sprachen des Unterworteinheitenpaars verwendet wird.

23. Spracherkennungssystem nach einem der Ansprüche 16 bis 22, wobei die Sprachenpaarerkennungseinheit ferner eine Länderbestimmungseinheit (32) zum Bestimmen der Amtssprachen des Landes, in welchem das Fahrzeug bewegt wird, umfasst, wobei die Sprachen zum Bestimmen der anderen Sprache des Sprachenpaars verwendet werden.

24. Spracherkennungssystem nach Anspruch 23, wobei die Länderbestimmungseinheit (32) eine Fahrzeugpositionsbestimmungseinheit (33) zum Bestimmen der aktuellen Fahrzeugposition und Ableiten der Amtssprache oder -sprachen des Landes, in welchem sich das Fahrzeug bewegt, umfasst.

25. Spracherkennungssystem nach einem der Ansprüche 16 bis 24, wobei eine Verwechslungsmatrixauswahleinheit (34) zum Auswählen einer Verwechslungsmatrix aus mehreren Verwechslungsmatrizen vorgesehen ist, und die Verwechslungsmatrixauswahleinheit zum Auswählen der Verwechslungsmatrix abhängig von der Information, welche von der Sprachenpaarbestimmungseinheit empfangen wird.

26. Spracherkennungssystem nach einem der Ansprüche 16 bis 25, ferner umfassend:
- eine Amtssprachenbestimmungseinheit zum Bestimmen der Amtssprache oder -sprachen des Landes, in welchem das Fahrzeug bewegt wird,
- eine Verwechslungsmatrixauswahleinheit (34) zum Auswählen einer Verwechslungsmatrix aus einer Gruppe von Verwechslungsmatrizen, wobei die Gruppe die Verwechslungsmatrizen enthält, in welchen eine Sprache des Sprachenpaars die Benutzersprache ist und die andere Sprache des Sprachenpaars eine der Amtssprachen des Landes ist, in welchem das Fahrzeug bewegt wird.

27. Spracherkennungssystem nach einem der Ansprüche 16 bis 26, wobei eine Verwechslungsbestimmungseinheit vorgesehen ist, welche ausgestaltet ist, die durchschnittliche Anzahl von Verwechslungen einer jeden Verwechslungsmatrix zu bestimmen.

28. Spracherkennungssystem nach Anspruch 26 und 27, wobei die Verwechslungsmatrixauswahleinheit ausgestaltet ist, die Matrix auszuwählen, welche die niedrigste Anzahl von Verwechslungen aufweist, wenn mehrere Verwechslungsmatrizen bereitgestellt werden, welche Sprachenpaare aufweisen, bei welchen eine der Sprachen die Benutzersprache ist und die andere Sprache eine Amtssprache des Landes ist, in welchem das Spracherkennungssystem verwendet wird.

29. Spracherkennungssystem nach einem der Ansprüche 26 bis 28, wobei die Verwechslungsmatrixauswahleinheit ausgestaltet ist, die Verwechslungsmatrix gemäß der Information der Verwechslungsbestimmungseinheit auszuwählen, welche die Information bereitstellt, welche Matrix die niedrigste Anzahl von Verwechslungen aufweist.

30. Spracherkennungssystem nach einem der Ansprüche 16 bis 29, wobei eine Punktzahlbestimmungseinheit vorgesehen ist, welche ausgestaltet ist, eine Punktzahl für jede Verwechslungsmatrix zu bestimmen, wobei die Punktzahl ein Passen zu der Benutzersprache anzeigt.

31. Spracherkennungssystem nach einem der Ansprüche 26 bis 30, wobei die Verwechslungsmatrixauswahleinheit ausgestaltet ist, eine Verwechslungsmatrix aus den mehreren Verwechslungsmatrizen abhängig von den Punktzahlen der unterschiedlichen Matrizen auszuwählen.

32. Spracherkennungssystem nach Anspruch 16, wobei das Spracherkennungssystem ausgestaltet ist, gemäß einem Verfahren zu arbeiten, wie es in einem der Ansprüche 1 bis 15 beansprucht wird.

## Revendications

1. Procédé de sélection par le biais d'une entrée vocale d'un élément de liste parmi une liste d'éléments, la sélection par entrée vocale étant dans une langue différente de la langue des éléments de liste, le procédé comprenant les étapes suivantes :
- la reconnaissance d'une chaîne d'unités de sous-mots pour l'entrée vocale,
- la comparaison de la chaîne reconnue d'unités de sous-mots avec la liste d'éléments et la génération d'une liste de candidat d'éléments qui correspondent le mieux sur la base du résultat de la comparaison, dans lequel pour la génération de la liste de candidat d'éléments qui correspondent le mieux, une matrice de confusion (20) est utilisée, laquelle contient des éléments de matrice (21) comprenant des informations sur la probabilité de confusion d'unités de sous-mots de différentes langues, dans lequel chaque élément de matrice (21) de la matrice de confusion représente la probabilité de confusion pour une paire d'unités de sous-mots spécifique (22), la paire d'unités de sous-mots contenant une unité de sous-mots d'une première langue et une unité de sous-mots d'une seconde langue, dans lequel la paire de langues et la matrice de confusion correspondante sont déterminées par la détermination de la langue de l'utilisateur et par la détermination de la langue de la liste d'éléments.

2. Procédé selon la revendication 1, dans lequel la matrice de confusion (20) contient les unités de sous-mots possibles d'une première langue et la probabilité que les unités de sous-mots possibles de la première langue soient confondues avec des unités de sous-mots d'une autre langue.

3. Procédé selon l'une quelconque des revendications précédentes, dans lequel la chaîne d'unités de sous-mots est reconnue en utilisant une unité de reconnaissance vocale d'unité de sous-mots (10) formée pour reconnaître des unités de sous-mots d'une première langue afin de reconnaître l'entrée vocale d'une langue autre que la première langue.

4. Procédé selon l'une quelconque des revendications précédentes, dans lequel différentes matrices de confusion (20) sont prévues, lesquelles fournissent des probabilités de confusion pour différentes paires de langues.

5. Procédé selon l'une quelconque des revendications précédentes, dans lequel la liste d'éléments comprend différents endroits de destination utilisés dans un système de navigation pour le guidage de l'utilisateur vers l'un des endroits de destination de la liste.

6. Procédé selon les revendications 4 et 5, dans lequel pour la détermination de la matrice de confusion qui doit être utilisée, il est déterminé dans quel pays le système de navigation est utilisé, lesdites informations étant utilisées pour déterminer la langue de la liste d'éléments comprenant les différents endroits de destination et/ou pour déterminer une langue de la paire de langues.

7. Procédé selon l'une quelconque des revendications précédentes, dans lequel pour la détermination de la matrice de confusion qui doit être utilisée, la langue de l'utilisateur du système de navigation est déterminée, la langue de l'utilisateur étant utilisée pour déterminer l'autre langue de la paire de langues.

8. Procédé selon les revendications 6 et 7, dans lequel la matrice de confusion est sélectionnée selon la langue du pays, dans lequel le système de navigation est utilisé et selon la langue de l'utilisateur.

9. Procédé selon l'une quelconque des revendications précédentes, dans lequel, quand différentes listes d'éléments sont prévues dans différentes langues et la liste de candidat d'éléments qui correspondent le mieux doit être déterminée, les différentes listes sont combinées et la liste de candidat d'éléments qui correspondent le mieux est générée sur la base des éléments des différentes listes.

10. Procédé selon l'une quelconque des revendications précédentes, dans lequel lorsque différentes matrices de confusion sont présentes avec différentes paires de langues et une pluralité d'éléments de liste est prévue et lorsqu'une des matrices de confusion doit être sélectionnée pour déterminer la liste de candidat, la matrice de confusion est sélectionnée présentant le plus petit nombre de confusions moyennes.

11. Procédé selon la revendication 10, dans lequel lorsqu'une des matrices de confusion a été sélectionnée, la liste d'éléments desdites différentes listes est sélectionnée selon la matrice de confusion sélectionnée.

12. Procédé selon la revendication 10 ou 11, dans lequel pour la détermination du plus petit nombre de confusions moyennes, un score est calculé pour chaque matrice, le score indiquant une concordance à la langue de l'utilisateur.

13. Procédé selon la revendication 12, dans lequel le score est déterminé par la détermination de l'entropie de chaque matrice, plus l'entropie est faible, mieux est l'adaptation à la langue de l'utilisateur.

14. Procédé selon la revendication 12 ou 13, dans lequel le score est déterminé par la détermination d'une information mutuelle, plus l'information mutuelle est élevé, mieux est l'adaptation à la langue de l'utilisateur.

15. Procédé selon l'une quelconque des revendications 12 à 14, dans lequel le score est déterminé par la réalisation d'expériences de reconnaissance en utilisant les différentes matrices et en utilisant des données tests, la matrice présentant les taux de reconnaissance les plus élevés utilisés pour la génération de la liste de candidat.

16. Système de reconnaissance vocale pour la sélection par le biais d'une entrée vocale d'un élément de liste dans une liste d'éléments, la sélection par l'entrée vocale étant dans une langue différente de la langue des éléments de liste, le système comprenant :
- une unité de reconnaissance vocale d'unité de sous-mots (10) pour la reconnaissance d'une chaîne d'unités de sous-mots pour l'entrée vocale,
- une unité de comparaison d'unité de sous-mots (11) pour la comparaison de la chaîne reconnue d'unités de sous-mots avec la liste d'éléments et la génération d'une liste de candidat d'éléments qui correspondent le mieux sur la base du résultat de comparaison,
une mémoire (13) pour le stockage au moins d'une matrice de confusion (20), chaque matrice contenant des éléments de matrice (21) comprenant des informations sur la probabilité de confusion qu'une unité de sous-mots d'une première langue soit confondue avec une unité de sous-mots d'une autre langue,
dans lequel l'unité de comparaison d'unité de sous-mots (11) est adaptée pour générer la liste d'éléments qui correspondent le mieux sur la base de ladite au moins une matrice de confusion,
dans lequel chaque élément de matrice (21) de la matrice de confusion représente la probabilité de confusion pour une paire d'unités de sous-mots spécifique (22), la paire d'unités de sous-mots contenant une unité de sous-mots d'une première langue et une unité de sous-mots d'une seconde langue, dans lequel la paire de langues et la matrice de confusion correspondante sont déterminées par la détermination de la langue de l'utilisateur et par la détermination de la langue de la liste d'éléments.

17. Système de reconnaissance vocale selon la revendication 16, dans lequel la matrice de confusion (20) contient des éléments de matrice (21) représentant les probabilités de confusion des unités de sous-mots possibles d'une première langue avec les unités de sous-mots d'une seconde langue.

18. Système de reconnaissance vocale selon l'une quelconque des revendications 16 à 17, dans lequel l'unité de reconnaissance vocale d'unité de sous-mots (10) est formée pour reconnaître des unités de sous-mots d'une première langue et génère la chaîne d'unités de sous-mots pour une entrée vocale d'une langue autre que la première langue.

19. Système de reconnaissance vocale selon l'une quelconque des revendications 16 à 18, dans lequel l'unité de stockage (13) contient différentes matrices de confusion fournissant les probabilités de confusion pour différentes paires d'unités de sous-mots de différentes langues.

20. Système de reconnaissance vocale selon la revendication 19, dans lequel le système comprend en outre une unité de détermination de paire de langues (31) pour la détermination de deux langues des paires d'unités de sous-mots.

21. Système de reconnaissance vocale selon l'une quelconque des revendications 16 à 20, dans lequel une base de données (12) est prévue contenant la liste d'éléments, la liste d'éléments correspondant à différents endroits de destination utilisés dans un système de navigation pour guider l'utilisateur vers l'un des endroits de destination de la liste.

22. Système de reconnaissance vocale selon la revendication 20 ou 21, dans lequel l'unité de détermination de paire de langues (31) comprend une unité de détermination de langue d'utilisateur pour la détermination de la langue de l'utilisateur du système de reconnaissance vocale, la langue d'utilisateur étant utilisée pour la détermination de l'une des langues de la paire d'unités de sous-mots.

23. Système de reconnaissance vocale selon l'une quelconque des revendications 16 à 22, dans lequel l'unité de détermination de paire de langues comprend en outre une unité de détermination de pays (32) pour la détermination des langues officielles du pays, dans lequel le véhicule se déplace, les langues étant utilisées pour la détermination de l'autre langue de la paire de langues.

24. Système de reconnaissance vocale selon la revendication 23, dans lequel l'unité de détermination de pays (32) comprend une unité de détermination de position de véhicule (33) pour la détermination de la position de véhicule réelle et la déduction de la langue ou des langues officielles du pays, dans lequel le véhicule se déplace.

25. Système de reconnaissance vocale selon l'une quelconque des revendications 16 à 24, dans lequel une unité de sélection de matrice de confusion (34) est prévue pour la sélection d'une matrice de confusion parmi une pluralité de matrices de confusion, la matrice de confusion sélectionnant l'unité pour la sélection de la matrice de confusion selon les informations reçues par l'unité de détermination de paire de langue.

26. Système de reconnaissance vocale selon l'une quelconque des revendications 16 à 25, comprenant en outre :
- une unité de détermination de langue officielle pour la détermination de la langue ou des langues officielles du pays, dans lequel le véhicule se déplace,
- une unité de sélection de matrice de confusion (34) pour la sélection d'une matrice de confusion parmi un groupe de matrices de confusion, le groupe contenant les matrices de confusion, dans lequel une langue de la paire de langues est la langue d'utilisateur et l'autre langue de la paire de langues est l'une des langues officielles du pays, dans lequel le véhicule se déplace.

27. Système de reconnaissance vocale selon l'une quelconque des revendications 16 à 26, dans lequel une unité de détermination de confusion est prévue, laquelle est adaptée pour déterminer le nombre moyen de confusions de chaque matrice de confusion.

28. Système de reconnaissance vocale selon les revendications 26 et 27, dans lequel l'unité de sélection de matrice de confusion est adaptée pour sélectionner la matrice présentant le plus petit nombre de confusions si plusieurs matrices de confusion sont prévues présentant des paires de langues, dans lesquelles l'une de la langue est la langue de l'utilisateur et l'autre langue est une langue officielle du pays, dans lequel le système de reconnaissance vocale est utilisé.

29. Système de reconnaissance vocale selon l'une quelconque des revendications 26 à 28, dans lequel l'unité de sélection de matrice de confusion est adaptée pour sélectionner la matrice de confusion selon les informations de l'unité de détermination de confusion fournissant les informations, selon lesquelles la matrice a le plus petit nombre de confusions.

30. Système de reconnaissance vocale selon l'une quelconque des revendications 16 à 29, dans lequel une unité de détermination de score est prévue, laquelle est adaptée pour déterminer un score pour chaque matrice de confusion, le score indiquant une concordance à la langue de l'utilisateur.

31. Système de reconnaissance vocale selon l'une quelconque des revendications 26 à 30, dans lequel l'unité de sélection de matrice de confusion est adaptée pour sélectionner une matrice de confusion parmi ladite pluralité de matrices de confusion selon les scores des différentes matrices.

32. Système de reconnaissance vocale selon la revendication 16, dans lequel le système de reconnaissance vocale est adapté pour travailler selon un procédé selon l'une quelconque des revendications 1 à 15.
